# EUROPEAN PATENT APPLICATION

(11) **EP 3 121 708 A1**
(43) Date of publication of application: **25.01.2017**
(21) Application number: 16180159.2
(22) Date of filing: 19.07.2016
(51) Int. Cl.: G06F 3/12

(54) **INFORMATION PROCESSING SYSTEM, INFORMATION PROCESSING METHOD, AND INFORMATION PROCESSING APPARATUS**

(30) Priority: 21.07.2015 JP 2015144096
(71) Applicant: Ricoh Company, Ltd., Tokyo 143-8555 (JP)
(72) Inventor: NAITOH, Shohichi, Tokyo, 143-8555 (JP)
(74) Representative: Schwabe - Sandmair - Marx

(57) **Abstract**

An information processing system (100) includes a first server apparatus (110) to provide a virtual desktop (111) to a terminal apparatus (140) via a network, a second server apparatus (120) to provide an application (121) to the terminal apparatus (140) via the virtual desktop (111), and a third server apparatus (130) to control printing by the image forming apparatuses (150a, 150b). The second server apparatus (120) includes an acquisition unit (401) to acquire predetermined information about the virtual desktop (111) based on a print request from the application (121), a determination unit (402) to determine the image forming apparatuses (150a, 150b) based on correspondence information (125), and a request unit (123) to transmit a print execution request to the third server apparatus (130).

The first server apparatus (110) includes an information provider (112) to report the predetermined information to the second server apparatus (120).

## Description

### BACKGROUND OF THE INVENTION

### 1. Field of the Invention

The disclosures discussed herein relate to an information processing system, an information processing method, and an information processing apparatus.

### 2. Description of the Related Art

Thin client systems implement a technology to allow client terminals having minimum functions to couple to terminal servers to access desktop environments and applications. Such thin client systems are mainly employed for facilitating security assurance and reduction in running costs.

Japanese Unexamined Patent Application Publication No. 2013-25774 discloses an example of an output distribution system capable of allocating print-out destinations to two or more image forming apparatuses based on output-destination information provided by a database server, under an environment having different thin client systems.

### SUMMARY OF THE INVENTION

It is a general object in one embodiment of the present invention to provide an information processing system having different thin client systems capable of facilitating allocation of print-out destinations without adding a database server or changing the terminal server.

According to an aspect of embodiments, there is provided an information processing system that includes a first server apparatus configured to provide a virtual desktop to a terminal apparatus coupled to the first server apparatus via a network, the virtual desktop representing a virtualized desktop environment; a second server apparatus configured to provide an application to the terminal apparatus via the virtual desktop; and a third server apparatus configured to manage a plurality of image forming apparatuses coupled to the network, and control printing executed by the image forming apparatuses. The second server apparatus includes an acquisition unit configured to acquire predetermined information about the virtual desktop from the virtual desktop, based on a print request from the application, a determination unit configured to determine a desired one of the image forming apparatuses based on correspondence information storing the predetermined information in association with the image forming apparatuses, and a request unit configured to transmit a print execution request to the third server apparatus to cause the determined one of the image forming apparatuses to execute printing. The first server apparatus includes an information provider configured to report the predetermined information about the virtual desktop to the second server apparatus, in response to an acquisition request for the predetermined information from the second server apparatus to the virtual desktop.

### ADVANTAGEOUS EFFECT

According to the embodiments, an information processing system having different thin client systems of a terminal server and an application delivery server may be capable of facilitating allocation of print-out destinations without adding a database server or changing the terminal server.

Other objects, features and advantages of the present invention will become more apparent from the following detailed description when read in conjunction with the accompanying drawings.

### BRIEF DESCRIPTION OF THE DRAWINGS

FIG. 1 is a diagram illustrating a configuration example of an information processing system according to an embodiment;
FIG. 2 is a diagram illustrating a hardware configuration example of a computer according to an embodiment;
FIG. 3 is a process block diagram illustrating an application delivery server according to an embodiment;
FIG. 4 is a diagram illustrating a functional configuration example of an output destination determination part according to an embodiment;
FIGS. 5A and 5B are diagrams illustrating functional configuration examples of an information provider according to a first embodiment;
FIG. 6 is a sequence diagram illustrating an example of a print process of an information processing system according to the first embodiment.
FIG. 7 is a sequence diagram illustrating an example of the print process of the information processing system according to the first embodiment.
FIG. 8 is a diagram illustrating a functional configuration example of an information provider according to a second embodiment;
FIG. 9 is a diagram illustrating a functional configuration example of an information provider according to the second embodiment; and
FIG. 10 is a sequence diagram illustrating an example of a print process of an information processing system according to the second embodiment.

### DETAILED DESCRIPTION OF THE PREFERRED EMBODIMENTS

The following illustrates embodiments with reference to the accompanying drawings.

### SYSTEM CONFIGURATION

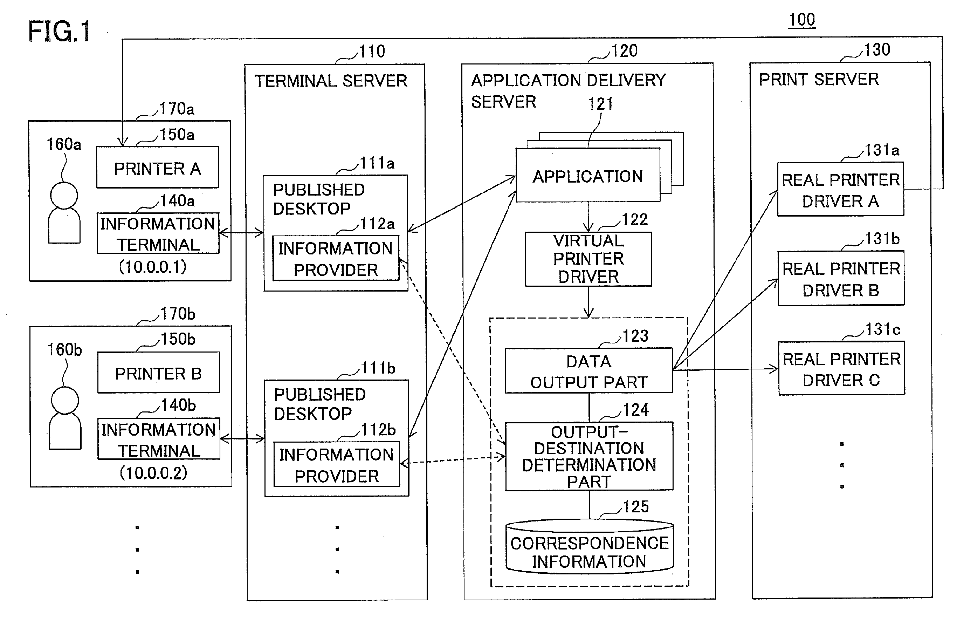

FIG. 1 is a diagram illustrating a configuration example of an information processing system 100 according to an embodiment. The information processing system 100 may include a terminal server 110, an application delivery server 120, a print server 130, an information terminal 140a and an information terminal 140b, and a printer 150a and a printer 150b. One of the information terminals 140a and 140b may hereinafter be referred to as an "information terminal 140". One of the printer 150a and the printer 150b may hereinafter be referred to as a "printer 150". The number of information terminals 140 and the number of printers 150 illustrated in FIG. 1 are examples.

The terminal server 110, the application delivery server 120, the print server 130, the information terminal 140, and the printer 150 may be mutually coupled via a network including the Internet or a local area network (LAN) so as to perform communications with one another.

The terminal server (a first server apparatus) 110 may be a system including one or more information processing apparatuses. The terminal server 110 provides virtualized desktop environments called "virtual desktops" to the information terminals 140 coupled to the terminal server 110 via the network. In FIG. 1, the terminal server 110 provides a published desktop (an example of the virtual desktop) 111a to the information terminal 140a coupled via the network. The terminal server 110 provides another published desktop 111b to the information terminal 140b coupled via the network. One of the published desktops 111a and 111b may hereinafter be referred to as a "published desktop 111". The terminal server 110 provides respective published desktops 111 to the information terminals 140.

An example of the terminal server 110 may include a Citrix (registered trademark) XenDesktop (registered trademark). However, the terminal service used by the terminal server 110 is not specifically limited to the Citrix XenDesktop. The terminal server 110 may employ other terminal services.

The application delivery server (a second server apparatus) 120 may be a system including one or more information processing apparatuses. The application delivery server 120 provides one or more applications 121 to the corresponding information terminal 140 via the published desktop 111 provided by the terminal server 110. In FIG. 1, the application delivery server 120 provides the applications 121 to the information terminal 140a via the published desktop 111a. The application delivery server 120 provides the applications 121 to the information terminal 140b via the published desktop 111b.

An example of the application delivery server 120 may include Citrix XenApp (registered trademark). However, the application delivery service used by the application delivery server 120 is not specifically limited to the Citrix XenApp. The application delivery server 120 may employ other application delivery services.

The print server (a third server apparatus) 130 may be a system including one or more information processing apparatuses. The print server 130 includes two or more printer drivers corresponding to two or more printers 150 (printers 150a, 150b, ...) to manage the printers 150. The print server 130 controls printing by the printers 150. In the following illustration, the printer drivers included in the print server 130 are referred to as "real printer drivers" to be distinct from virtual printer drivers included in the application delivery server 120.

Examples of the information terminal (terminal apparatus) 140 may include information processing apparatuses including a desktop personal computer (PC) and a notebook PC. For example, a user 160a of an information terminal 140a uses the information terminal 140a to log into the terminal server 110 to have access to the published desktop 111a and the applications 121. A user 160b of an information terminal 140b uses the information terminal 140b to log into the terminal server 110 to have access to the published desktop 111b and the applications 121. In FIG. 1, "10.0.0.1" in brackets given to the information terminal 140a indicates an IP address of the information terminal 140a, and "10.0.0.2" in brackets given to the information terminal 140b indicates an IP address of the information terminal 140b.

The printers 150 indicate image forming apparatuses corresponding to the information terminals 140. In FIG. 1, a printer A is the printer 150a corresponding to the information terminal 140a, and the printer A and the information terminal 140a are assumed to be installed in the same room 170a. A printer B is the printer 150b corresponding to the information terminal 140b, and the printer B and the information terminal 140b are assumed to be installed in the same room 170b.

More specifically, rooms 170a and 170b may be examination space in a medical site including a hospital, and the users 160a and 160b may be physicians. As illustrated in FIG. 1, the information terminal 140a and the printer 150a are assumed to be installed in the room 170a, and the information terminal 140b and the printer 150b are assumed to be installed in the room 170b.

In this example, the user (physician) 160a performs physical examination in the room (examination space) 170a and inputs, for example, an examination result into the information terminal 140a. The user 160a may optionally use the printer A to print the input examination result. The correspondence relationship between the information terminal 140a and the printer 150a may remain the same when another user (physician) 160 uses the room 170a instead of the user (physician) 160a.

The application delivery server 120 includes correspondence information 125 that stores correspondence relationships between the information terminals 140 and the printers 150 in advance. In FIG. 1, the application delivery server 120 stores information (e.g., an IP address) about the information terminal 140a in association with information (e.g., a printer name) about the printer 150a in the correspondence information 125 in advance. The application delivery server 120 stores information about the information terminal 140b in association with information about the printer 150b in the correspondence information 125 in advance.

The application delivery server 120 includes an output-destination determination part 124 (a determination unit) to determine a desired one of the printers 150 to execute requested printing in response to a print request from the application 121.

The user 160a is, for example, assumed to have operated the information terminal 140a to access the application 121 via the published desktop 111a to perform a printing operation via the application 121. The application 121 utilizes the virtual printer driver 122 to transmit a print request. The virtual printer driver 122 is a printer driver to convert electronic data subject to printing output from the application 121 into print data (intermediate print data) independent of models of the printers 150.

In this example, the output-destination determination part 124 acquires predetermined information relating to the published desktop 111a from the information provider 112a of the published desktop 111a used by the user 160a. The output-destination determination part 124 acquires, for example, information (e.g., an IP address) about the information terminal 140a using the published desktop 111a from the information provider 112a of the published desktop 111a used by the user 160a.

The information provider 112a may be application programs (hereinafter referred to as "applications") installed in the published desktop 111a. The information provider 112a acquires information relating to the published desktop 111a from outside in response to an acquisition request for the information relating to the published desktop 111a to provide a web application programming interface

(API). The output-destination determination part 124 determines one of the printers 150 to execute a print process requested by the application 121 based on the correspondence information 125 and the information acquired from the information provider 112a.

The application delivery server 120 further includes a data output part (a request unit) 123 to transmit a print execution request to the print server 130 to cause the printer 150 determined by the output-destination determination part 124 to execute requested printing received by the application 121. The data output part 123 may transmit a print request including information about the printer 150 (e.g., a printer name of the printer 150a) and intermediate print data converted by the virtual printer driver 122 to the print server 130.

The print server 130 that has received the print request from the application delivery server 120 uses a printer driver (e.g., a real printer driver 131a) corresponding to the information about the printer 150a included in the print request to execute a print process. The real printer driver is an example of a printer driver to convert the intermediate print data into print data in a form that may be printed by the printers 150. The print server 130 includes real printer drivers corresponding to the printers 150.

The information processing system 100 according to the embodiment may facilitate allocation of printing to two or more printers 150 without having a database server that provides output destination information.

In the information processing system 100 according to the embodiment, the output-destination determination part 124 of the application delivery server 120 acquires the information about the information terminal 140 using the Web API provided by the information provider 112 installed in the published desktop 111. Thus, the information processing system 100 according to the embodiment may be able to acquire the information about the information terminal 140 from the terminal server 110 without changing a system pf the terminal server 110.

The system configuration illustrated in FIG. 1 is an example. The information terminals 140 in FIG. 1 may include terminal apparatuses including tablet terminals and smartphones owned by the users 160 that are available to the users 160 outside the rooms 170. The printers 150 may include shared printers 150 installed in the clerk's office rooms or reception areas.

### HARDWARE CONFIGURATION

The terminal server 110, the application delivery server 120, the print server 130, and the information terminal 140 in FIG. 1 may include general-purpose computer configurations.

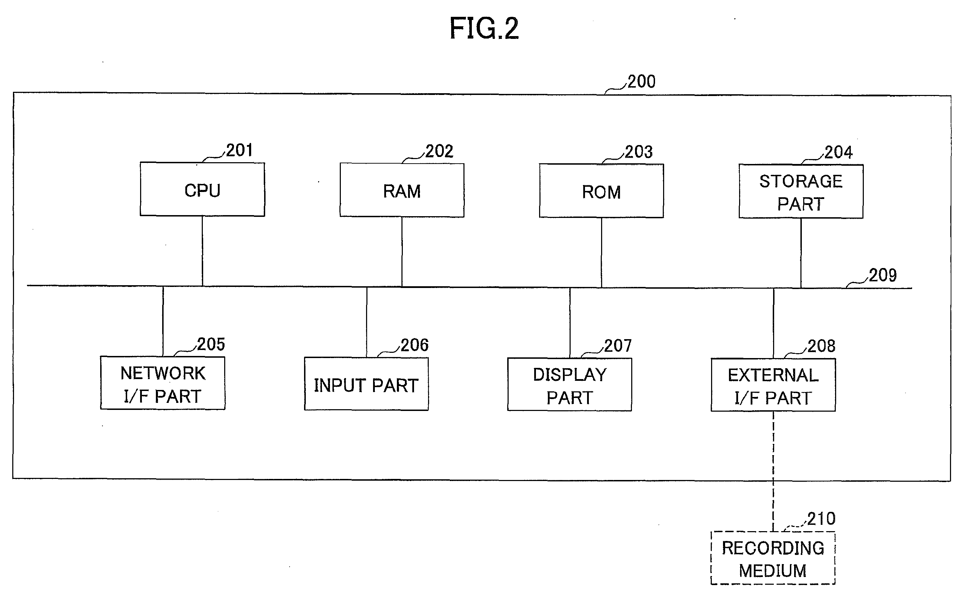

FIG. 2 is a diagram illustrating a hardware configuration example of a computer according to an embodiment. The computer 200 may include a central processing unit (CPU) 201, a random access memory (RAM) 202, a read only memory (ROM) 203, a storage part 204, a network interface (I/F) 205, an input part 206, a display part 207, an external I/F 208, and a bus 209. The input part 206 and the display part 207 may be coupled to the computer 200 as required.

The CPU 201 is a processor to load programs and data in the RAM 204 from the ROM 203 or the storage part 204 to execute processes in accordance with the loaded programs and data, thereby implementing overall control operations or functions of the computer 200. The RAM 202 is an example of a volatile memory (a storage device) to temporarily store programs or data. The ROM 203 is an example of a nonvolatile memory (a storage device) to retain programs or data when the power supply is turned off. The ROM 203 stores, for example, the BIOS to be executed at the startup of the computer 200, programs and data for various types of settings.

The storage part 204 is an example of a large-capacity storage device that stores programs and data. Examples of the programs and data stored in the storage part 204 include an operating system (OS) to provide overall control of the computer 200 and various types of programs including application programs (hereinafter simply called "applications") to provide various types of functions on the OS. The storage part 204 may be implemented by a hard disk drive (a HDD), a solid state device (an SDD), and the like.

The network I/F part 205 is an interface to couple the computer 200 to a network. The computer 200 may be able to communicate data with other computers via the network I/F part 205.

The input part 206 is an input device for the user to input operation signals. Examples of the input part 206 include a keyboard, a mouse, a touch panel, and the like. The display part 207 is a display device including a display and the like, and displays process results by the computer 200.

The external I/F part 208 is an interface between the computer 200 and external devices. Examples of the external devices include a recording medium 210 and the like. The external I/F part 208 allows the computer 200 to read information from the recording medium 210 or write information on the recording medium 210 via the external I/F 208. Examples of the recording medium 210 include a universal bus (USB) memory, various types of memory cards, and the like.

The bus 209 is mutually coupled to the above-described components, and propagates signals including address signals, data signals, and various types of control signals.

The terminal server 110, the application delivery server 120, the print server 130, and the information terminals 140 that include the above-described hardware configuration of the computer 200 may be able to execute the later-described processes.

### SOFTWARE CONFIGURATION

### APPLICATION DELIVERY SERVER

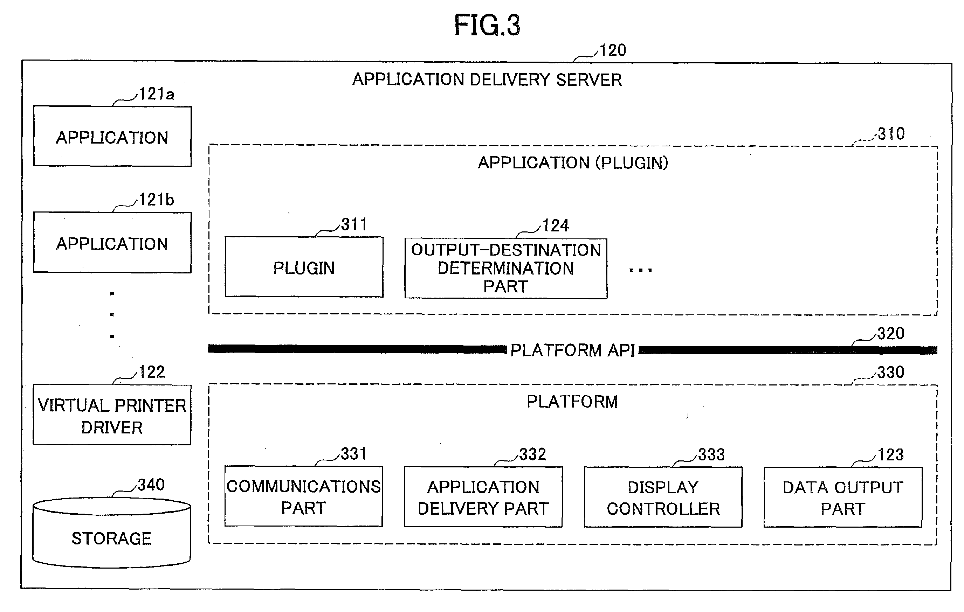

FIG. 3 is a process block diagram illustrating an application delivery server according to an embodiment. The application delivery server 120 executes programs to implement the applications 121a and 121b, the virtual printer driver 122, an application (plugin) 310, a platform API 320, a platform 330, a storage 340, and the like.

The application (plugin) 310 is an application to operate on the platform 330 and use functions on the platform 330 via the platform API 320. The application delivery server 120 may include two or plugins 311 as the application (plugin) 310. In FIG. 3, the output-destination determination part 124 illustrated in FIG. 1 is depicted as a plugin of the application (plugin) 310.

The platform API 320 is an interface for the plugins included the application (plugin) 310 to access functions of the platform 330. The platform API 320 include predefined interfaces for allowing the platform 330 to receive requests from the plugins included in the application (plugin) 310. The platform API 320 may, for example, include functions, classes, and the like.

The platform 330 includes two or more functions (programs) mutually available between the plugins 311 included in the application (plugin) 310. In FIG. 3, the platform 330 includes a communications part 331, an application delivery part 332, a display controller 333, and a data output part 123.

The communications part 331 couples the application delivery server 120 to the network, and performs communications with the terminal server 110, the print server 130, and the like. The application delivery part 332 implements an application delivery function of the application delivery server 120. The display controller 333 displays various types of setting screens on the display part 207. In FIG. 3, the data output part 123 illustrated in FIG. 1 is depicted as one of the functions of the platform 330.

The storage 340 stores various types of data including the correspondence information 125 illustrated in FIG. 1 and programs, and may be implemented by the storage part 204 illustrated in FIG. 2.

The applications 121a and 121b may be a word-processing application, a spreadsheet application, a presentation application, and the like that are delivered by the application delivery server 120. One of the applications 121 a and 121 b may hereinafter be referred to as an "application 121".

The virtual printer driver 122 is, as illustrated with reference to FIG. 1, a printer driver to convert electronic data subject to printing output from the applications 121a and 121b into print data (intermediate print data) independent of models of the printers 150.

In FIG. 3, the functions of the platform 330 may be installed with the application delivery server 120 as the standard functions, and the applications of the application (plugin) 310 may optionally be selected by the administrator or the users.

FIG. 3 illustrating the process block diagram of the application delivery server 120 is an example. For example, the application delivery server 120 does not necessarily include a hierarchical structure of the application (plugin) 310, the platform API 320, and the platform 330. The data output part 123 may be included in the application (plugin) 310.

### FUNCTIONAL CONFIGURATION OF OUTPUT-DESTINATION DETERMINATION PART

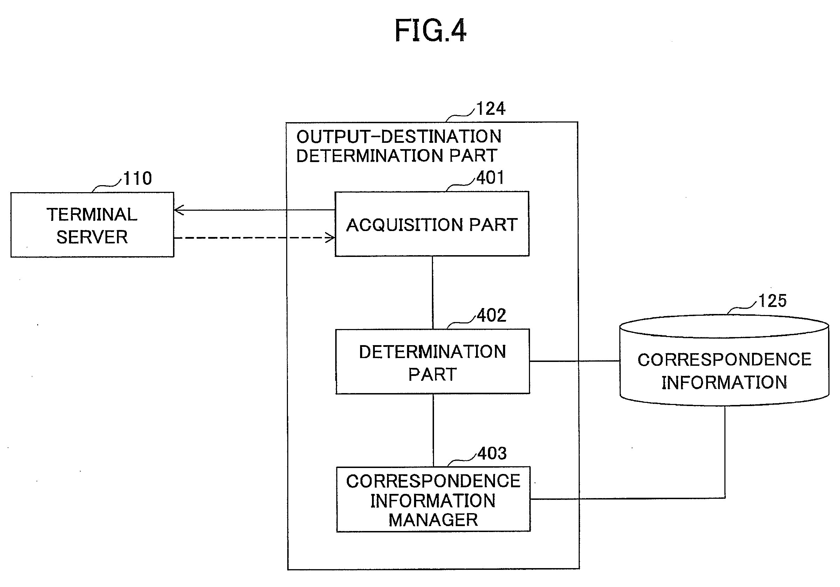

FIG. 4 is a diagram illustrating a functional configuration example of an output-destination determination part according to an embodiment. The output-destination determination part 124 includes an acquisition part 401, a determination part 402, and a correspondence information manager 403.

The acquisition part 401 acquires predetermined information relating to the published desktop 111 from the terminal server 110 based on the print request from the application 121.

For example, the user 160a is assumed to operate the information terminal 140a to access the application 121 via the published desktop 111a to perform a printing operation via the application 121. The application 121 utilizes the virtual printer driver 122 to request printing.

In this example, the acquisition part 401 acquires the predetermined information relating to the published desktop 111a from the information provider 112a of the published desktop 111a used by the user 160a. The predetermined information may include information (e.g., an IP address, a MAC address, or identification information) about the information terminal 140a that utilizes the published desktop 111a, or unique information (e.g., time information, language information, and area information) about the published desktop 111a. The illustration given below is based on the assumption that the predetermined information is the IP address of the information terminal 140a.

The acquisition part 401 transmits an acquisition request for the predetermined information relating to the published desktop 111a to the Web API provided by the information provider 112a, based on the IP address of the published desktop 111a as a source of the print request. In response to the acquisition request from the acquisition part 401, the information provider 112a of the terminal server 110 reports (transmits) the IP address of the information terminal 140a that utilizes the published desktop 111a to the acquisition part 401. The acquisition part 401 acquires the IP address of the information terminal 140a transmitted from the information provider 112a, and reports the acquired information to the determination part 402.

The determination part 402 determines a requested one of the printers 150 to execute printing, based on the correspondence information 125 storing the predetermined information in association with the corresponding printers 150 and the predetermined information acquired by the acquisition part 401. For example, the determination part 402 determines one of the printers 150 to execute printing, based on the correspondence information 125 storing the IP addresses of the information terminals 140 in association with the information about the printers 150 and the reported IP address of the information terminal 140a.

**Table 1**

| IP ADDRESS OF INFORMATION TERMINAL | PRINTER |
|---|---|
| 10.0.0.1 | PRINTER A |
| 10.0.0.2 | PRINTER B |
| 10.0.0.3 | PRINTER C |
| 10.0.0.4 | PRINTER A |
| ... | ... |

Table 1 illustrates an example of the correspondence information 125.

In Table 1, the correspondence information 125 stores the IP addresses of the information terminals 140 in association with respective pieces of the information about the printers 150. The IP address of the information terminal 140 is an example of information about the information terminal 140. The information about the information terminal 140 may uniquely identify the information terminal 140. Examples of the information about the information terminal 140 include destination information including a MAC address of the information terminal 140, identification information, and information including a name of the information terminal 140. The information about the printer 150 may uniquely identify the printer 150. Examples of the information about the printer 150 include a name or an ID of the printer 150, and a name or an ID of the real printer driver 131. The following illustration is based on the assumption that the information about the printer 150 is a printer name (a name of the printer 150).

For example, when the IP address of the information terminal 140a acquired by the acquisition part 401 is "10.0.0.1", the determination part 402 may be able to determine the printer 150a as the printer to execute printing based on Table 1.

The correspondence information manager 403 stores the correspondence information 125 in the storage 340, for example, to manage the stored correspondence information 125. The correspondence information manager 403 may store the correspondence information 125 in an external storage server or the like to manage the stored correspondence information 125.

The correspondence information manager 403 may optionally include a function to cause the display controller 333 to display a correspondence information 125 setting screen on the display part 207 to register, change, or delete the correspondence information 125 in accordance with the administrator's operations.

The following illustrates a functional configuration of the information provider 112.

### FIRST EMBODIMENT

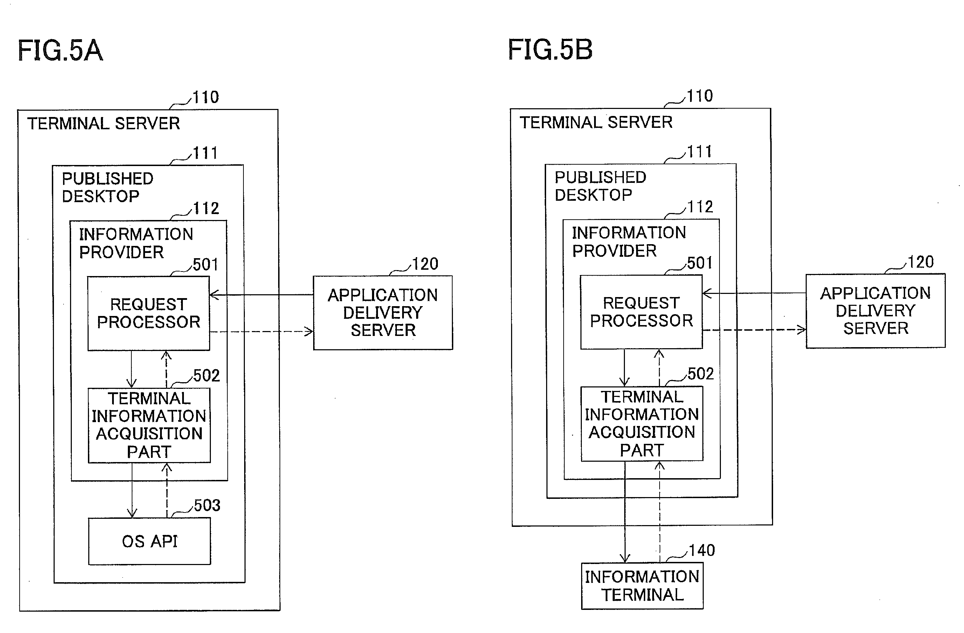

FIGS. 5A and 5B are diagrams illustrating functional configuration examples of an information provider according to a first embodiment. The information provider 112 may be implemented by an application installed on a published desktop 111 provided by the terminal server 110.

The information provider 112 may preferably be installed on the predetermined published desktop 111 in advance to allow a new user to use the information provider 112 without installation of the information provider 112.

The information provider 112 acquires predetermined information relating to the published desktop 111 and reports the acquired information to the application delivery server 120, in response to an acquisition request for the predetermined information relating to the published desktop 111 from the application delivery server 120. The first embodiment illustrated below is based on the assumption that the predetermined information relating to the published desktop 111 is an IP address of the information terminal 140 that uses the published desktop 111. The IP address of the information terminal 140 is an example of information of the information terminal 140.

FIG. 5A is a diagram illustrating an example of a functional configuration of the information provider 112. The information provider 112 includes a request processor 501 and a terminal information acquisition part 502.

The request processor 501 is an interface including a Web API for receiving the acquisition request for the predetermined information relating to the published desktop 111 from the application delivery server 120.

The request processor 501 receives the acquisition request for the predetermined information relating to the published desktop 111 from the application delivery server 120, and subsequently instructs the terminal information acquisition part 502 to acquire information about the information terminal 140 that utilizes the published desktop 111. The first embodiment assumes that the information about the information terminal 140 is an IP address of the information terminal 140.

The terminal information acquisition part 502 acquires the information (IP address) of the information terminal 140 in response to the instruction from the request processor 501. In FIG. 5A, the terminal information acquisition part 502 accesses an operating system (OS) API 503 operating on the published desktop 111 to acquire the IP address of the information terminal 140, and transmits (reports) the acquired IP address to the request processor 501.

The request processor 501 transmits the IP address of the information terminal 140 received from the terminal information acquisition part 502 to the application delivery server 120.

FIG. 5b is a diagram illustrating another example of a functional configuration of the information provider 112. As illustrated in FIG. 5B, the terminal information acquisition part 502 may acquire the IP address of the information terminal 140 from the information terminal 140 instead of the OS API 503.

### PROCESS FLOW

The following illustrates an example of a print process of the information processing system 100.

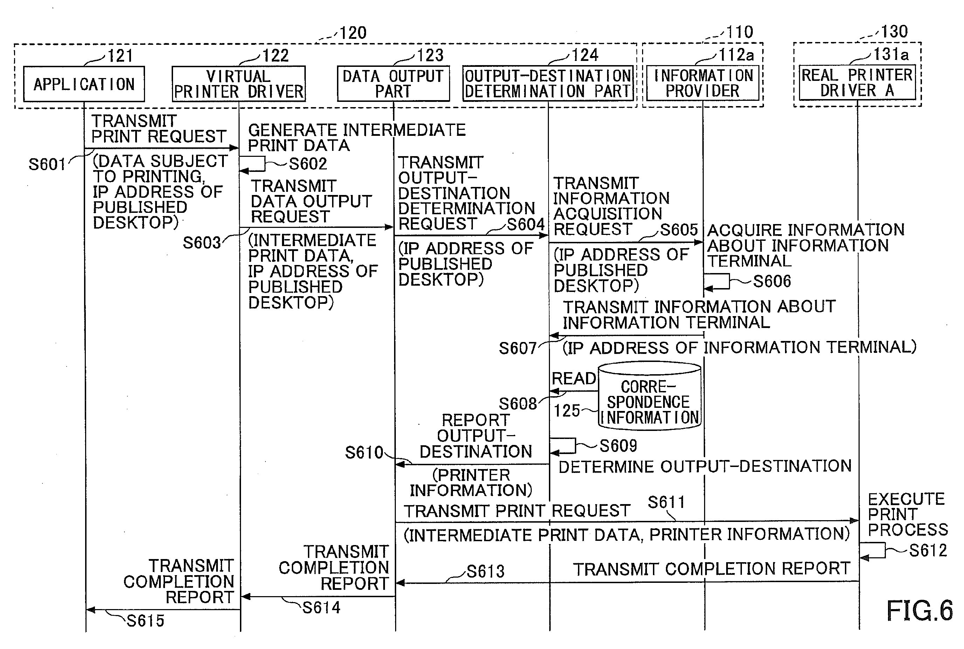

FIG. 6 is a sequence diagram illustrating an example of the print process of the information processing system 100 according to the first embodiment.

In step S601, the application 121 of the application delivery server 120 transmits a print request to the virtual printer driver 122, in response to a print operation, for example, by the user 160a illustrated in FIG. 1. The print request may include data subject to printing and information including the IP address of the published desktop 111a utilized by the user 160a. The IP address of the published desktop 111a is an example of information for specifying the published desktop 111a.

In step S602, the virtual printer driver 122 of the application delivery server 120 generates intermediate print data described with reference to FIG. 3, based on the data subject to printing received from the application 121.

In step S603, the virtual printer driver 122 transmits a data output request to the data output part 123. The data output request may include the intermediate print data generated in step S602, and the IP address of the published desktop 111a.

In step S604, the data output part 123 transmits an output-destination determination request to the output-destination determination part 124. The output-destination determination request may include the IP address of the published desktop 111a.

In step S605, the output-destination determination part 124 transmits an information acquisition request relating to the published desktop 111a to the information provider 112a. The information provider 112a operates on the published desktop 111a of the terminal server 110, based, for example, on the IP address of the published desktop 111a.

In step S606, the information provider 112a acquires the IP address (an example of information about the information terminal 140) of the information terminal 140a from, for example, one of the OS APIs operating on the published desktop 111a and information terminal 140a utilizing the published desktop 111a.

In step S607, the information provider 112a transmits (reports) the IP address of the information terminal 140a acquired in step S606 to the application delivery server 120.

In step S608, the output-destination determination part 124 of the application delivery server 120 reads the correspondence information 125 from, for example, the storage 340. The output-destination determination part 124 may read the correspondence information 125 before receiving the information about the information terminal 140 in step S607.

In step S609, the output-destination determination part 124 determines a printer as the output destination, based on the read correspondence information 125 and the information about the information terminal 140 (the IP address of the information terminal 140a) acquired from the information provider 112a of the terminal server 110.

For example, when the IP address of the information terminal 140 acquired from the information provider 112 is "10.0.0.1", the output-destination determination part 124 determines a printer A as the output destination (printer) to execute printing according to the correspondence information 125 illustrated in Table 1.

In step S610, the output-destination determination part 124 reports the output destination determined in step S609 to the data output part 123. The report includes printer information (e.g., a printer name) for specifying the printer 150 to execute printing.

In step S611, the data output part 123 transmits a print request to the print server 130. The print request may include the intermediate print data generated in step S602 and the information (e.g., the printer name) about the printer 150 to execute printing determined in step S609.

In step S612, the print server 130 that has received the print request from the application delivery server 120 causes the printer 150a to execute printing via a real printer driver 131a corresponding to the information about the printer 150a included in the print request. For example. the print server 130 may store correspondence relationships between the information about the printers 150 and respective real printer drivers 131 in advance. Or the print server 130 may cause the real printer driver 131 corresponding to the information about the printer 150 included in the print request to execute printing.

In step S613, the print server 130 transmits a completion report indicating that the printing has completed to the application delivery server 120.

In steps S614 and S615, the completion report received from the print server 130 is transmitted sequentially from the data output part 123 to the virtual printer driver 122, and then from the virtual printer driver 122 to the application 121.

In the information processing system 100 having mixed thin client systems, the above-described process facilitates allocation of printing without an additional database server or changing a main body of the terminal server 110.

### ANOTHER EXAMPLE OF PRINT PROCESS

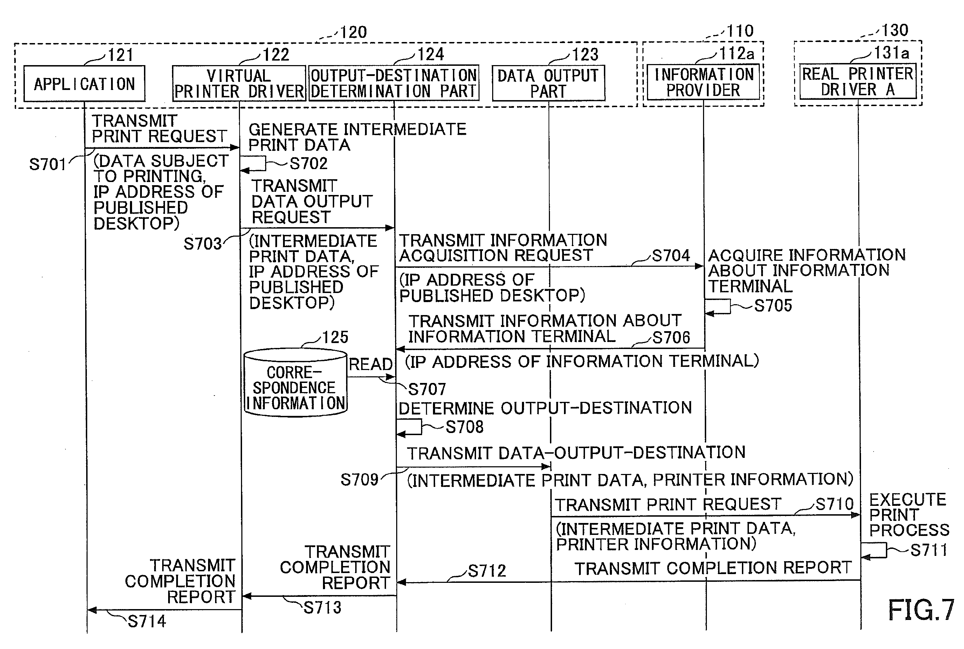

FIG. 7 is a sequence diagram illustrating another example of the print process of the information processing system 100 according to the first embodiment. Steps S711 to S714 of FIG. 7 are similar to steps S612 to S615 of FIG. 6. Thus, the following mainly illustrates the difference between the processes of FIG. 7 and FIG. 6, and omits a duplicated illustration.

In step S701, the application 101 of the application delivery server 120 transmits a print request to the virtual printer driver 122 in response to a print operation, for example, by the user 160a illustrated in FIG. 1. The print request may include data subject to printing and information including the IP address of the published desktop 111a utilized by the user 160a.

In step S702, the virtual printer driver 122 of the application delivery server 120 generates the intermediate print data based on the data subject to printing received from the application 121.

In step S703, the virtual printer driver 122 transmits a data output request to the output-destination determination part 124. The data output request may include the intermediate print data generated in step S702 and the IP address of the published desktop 111a.

In step S704, the output-destination determination part 124 transmits an information acquisition request relating to the published desktop 111a to the information provider 112a that operates on the published desktop 111a of the terminal server 110, based, for example, on the IP address of the published desktop 111a.

In step S606, the information provider 112a acquires the IP address of the information terminal 140a (an example of information about the information terminal 140) from, for example, one of the OS APIs operating on the published desktop 111a and information terminal 140a utilizing the published desktop 111a.

In step S706, the information provider 112a transmits (reports) the information about the information terminal 140 (the IP address of the information terminal 140a) acquired in step S705 to the application delivery server 120.

In step S707, the output-destination determination part 124 of the application delivery server 120 reads the correspondence information 125 from, for example, the storage 340.

In step S708, the output-destination determination part 124 determines a printer as the output destination, based on the read correspondence information 125 and the information about the information terminal 140 (the IP address of the information terminal 140a) acquired from the information provider 112a of the terminal server 110.

In step S709, the output-destination determination part 124 transmits a data output request to the data output part 123. The data output request may include the intermediate print data generated in step S702 and the information about the printer 150 as the output destination.

In step S710, the data output part 123 transmits a print request to the print server 130. The print request may include the intermediate print data generated in step S702 and the information (e.g., a printer name) about the printer 150 to execute printing determined in step S708.

Subsequent steps S711 to S714 in FIG. 7 are similar to steps S612 to S615.

The process of FIG. 7 may demonstrate that the configuration of the application delivery server 120 may be implemented by having the virtual printer driver 122 and the output-destination determination part 124 corresponding to the first embodiment installed with the application delivery server 120 illustrated in FIG. 3. The configuration of the first embodiment may thus be implemented without changing the data output part 123 included in the platform 330.

### SECOND EMBODIMENT

In the first embodiment, the information provider 112 of the terminal server 110 provides the information (e.g., an IP address) about the information terminal 140 that utilizes the published desktop 111 as the predetermined information relating to the published desktop 111. However, the information (e.g., an IP address) about the information terminal 140 is an example of the predetermined information relating to the published desktop 111.

In the second embodiment, the information provider 112 of the terminal server 110 provides unique information of the published desktop 111 as the predetermined information relating to the published desktop 111.

### FUNCTIONAL CONFIGURATION

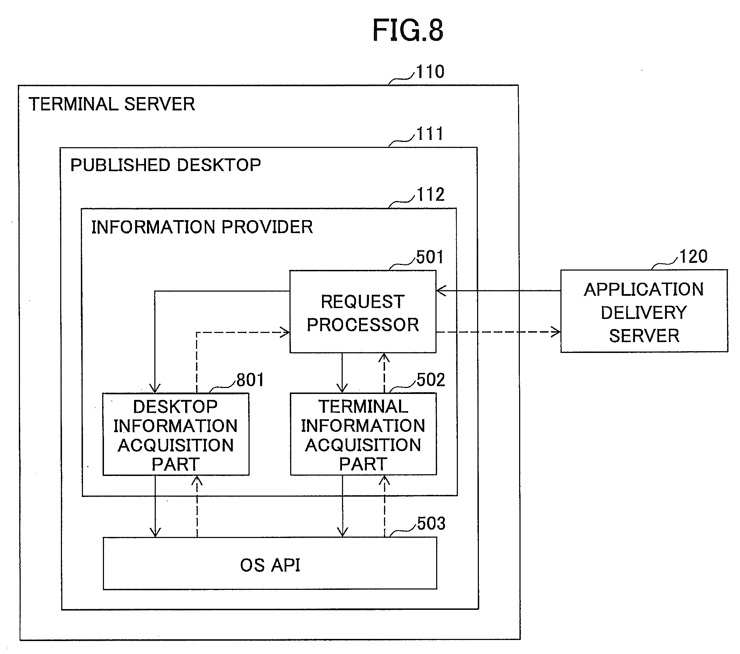

FIG. 8 is a diagram illustrating a functional configuration example of an information provider according to a second embodiment. The information provider 112 illustrated in FIG. 8 includes a desktop information acquisition part 801 in addition to the components of the information provider 112 according to the first embodiment illustrated in FIG. 5A.

In FIG. 8, the request processor 501 that has received an acquisition request for the information relating to the published desktop 111 from the application delivery server 120 instructs the terminal information acquisition part 502 to acquire the IP address of the information terminal 140, in a manner similar to the first embodiment. In the second embodiment, the request processor 501 further transmits an acquisition request for unique information about the published desktop 111 to the desktop information acquisition part 801.

The unique information about the published desktop 111 may include time information, language information, area information, and locale information. The following illustration is based on the assumption that the unique information about the published desktop 111 is time information.

The desktop information acquisition part 801 may acquire the unique information about the published desktop 111 (e.g., time information), for example, using the OS API 503, and transmits (reports) the acquired unique information to the request processor 501.

The request processor 501 transmits the IP address of the information terminal 140 received from the terminal information acquisition part 502 and the unique information about the published desktop 111 received from the desktop information acquisition part 801 to the application delivery server 120. The configuration of the information provider 112 illustrated in FIG. 8 is an example.

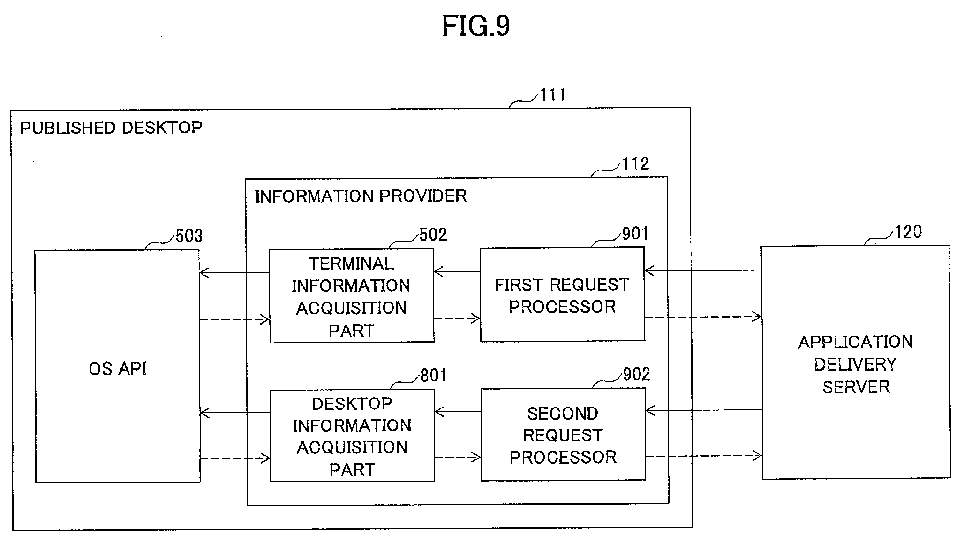

FIG. 9 is a diagram illustrating another functional configuration example of an information provider according to the second embodiment. In FIG. 9, the information provider 112 includes a first request processor 901 and a second request processor 902 instead of the request processor 501 of the information provider 112 illustrated in FIG. 8.

As illustrated in FIG. 9, the application delivery server 120 transmits an acquisition request for information about the information terminal 140 to the first request processor 901 to acquire the information about the information terminal 140 that utilizes the published desktop 111. The application delivery server 120 transmits an acquisition request for information about the information terminal 140 to the second request processor 902 to acquire the information about the information terminal 140 that utilizes the published desktop 111. The information provider 112 may thus include two or more request processors (Web APIs) for acquiring different pieces of information relating to the published desktop 111 as described above.

### PROCESS FLOW

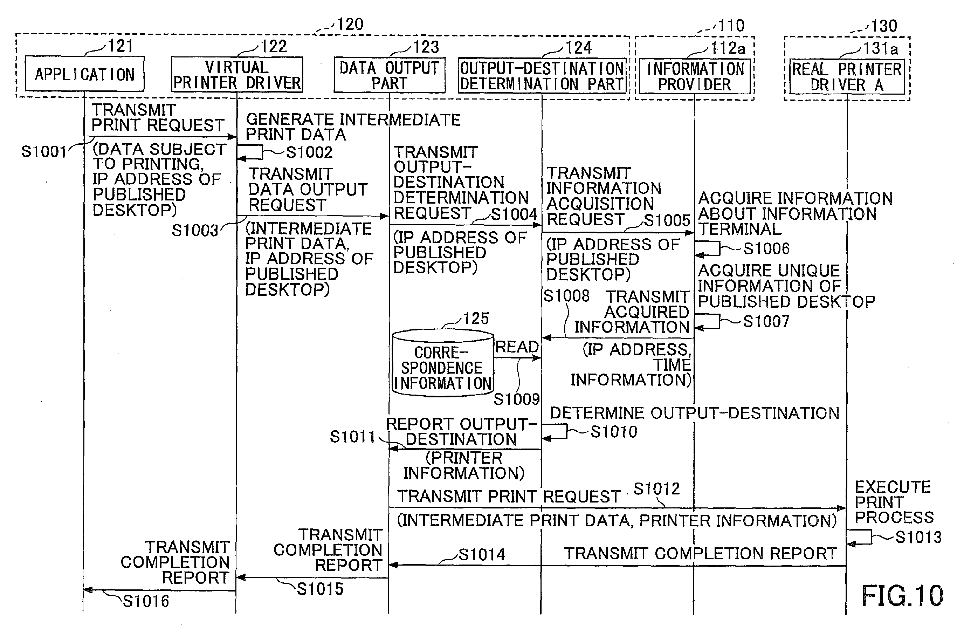

FIG. 10 is a sequence diagram illustrating an example of the print process of the information processing system 100 according to the second embodiment. Steps S1001 to S1006 and steps S1011 to S1016 in FIG. 10 are similar to steps S601 to S606 and steps S610 to S615. The following illustration is mainly based on the difference between the processes in FIG. 10 and FIG. 6. Note also that the terminal server 110 illustrated in FIG. 10 is assumed to include the configuration of the terminal server 110 illustrated in FIG. 8.

The information provider 112a of the terminal server 110 that has received the acquisition request from the application delivery server 120 in step S1005 acquires the IP address of the information terminal 140a (an example of information about the information terminal 140) in step S1006.

In step S1007, the information provider 112a acquires the unique information about the published desktop 111a from the OS API 503 via the desktop information acquisition part 801 illustrated in FIG. 8. The following illustration is based on the assumption that the unique information about the published desktop 111a is time information of the published desktop 111a.

In step S1008, the information provider 112a transmits (reports) the information acquired in step S1006 and the information acquired in step S1007 (the IP address of the information terminal 140a and time information of the published desktop 111a) to the application delivery server 120.

In step S1009, the output-destination determination part 124 of the application delivery server 120 reads the correspondence information 125 from, for example, the storage 340.

**Table 2**

| IP ADDRESS OF INFORMATION TERMINAL | TIME | PRINTER |
|---|---|---|
| 10.0.0.1 | 9:00 - 16:59 | PRINTER A |
| | 17:00 - 21:59 | PRINTER M |
| | 22:00 - 8:59 | PRINTER N |
| 10.0.0.2 | 10:00 - 15:59 | PRINTER B |
| | 16:00 - 9:59 | PRINTER X |
| ... | ... | ... |

Table 2 illustrates an example of the correspondence information 125 in accordance with the second embodiment.

In Table 2, the correspondence information 125 according to the second embodiment further includes "time" information in addition to the information included in the correspondence information 125 illustrated in Table 1. In Table 2, the correspondence information 125 stores the predetermined information relating to the published desktop 111 (the IP address of the information terminal 140 and the time information of the published desktop 111) in advance in association with information about the printer 150 corresponding to the predetermined information.

In step S1010, the output-destination determination part 124 determines a printer as the output destination, based on the correspondence information 125 read from the correspondence information 125 of Table 2 and the information acquired from the information provider 112a of the terminal server 110. Steps S 1011 to S1016 in FIG. 10 are similar to steps S610 to S615 of the first embodiment illustrated in FIG. 6.

When the IP address of the information terminal 140 acquired from the information provider 112a is "10.0.0.1", and time information of the published desktop 111a is "10:00", the output-destination determination part 124 determines a printer A as a printer to execute printing according to Table 2. When the IP address of the information terminal 140 acquired from the information provider 112a is "10.0.0.1", and time information of the published desktop 111a is "18:00", the output-destination determination part 124 determines a printer M as a printer to execute printing according to Table 2. When the IP address of the information terminal 140 acquired from the information provider 112a is "10.0.0.1 ", and time information of the published desktop 111a is "23:00", the output-destination determination part 124 determines a printer N as a printer to execute printing according to Table 2.

For example, the information terminal 140a may be a tablet terminal used by the user 160a in FIG. 1. In this case, the output-destination determination part 124 may cause the printer 150a to execute printing in a time period (9:00 to 16:59) where the user 160a performs physical examination in the room 170a. The output-destination determination part 124 may cause the printer M near the user's office to execute printing in a time period (17:00 to 21:59) where the user 160a is in the user's office. The output-destination determination part 124 may cause the printer N in the clerk's office or a reception area to execute printing in a time period (22:00 to 8:59) where the user 160a returns to the user's home.

The correspondence information 125 illustrated in Table 2 is an example. The correspondence information 125 according to the second embodiment may further include information including a day of the week as illustrated in Table 3.

**Table 3**

| IP ADDRESS OF INFORMATION TERMINAL | DAY OF WEEK | TIME | PRINTER |
|---|---|---|---|
| 10.0.0.1 | MON., WED., FRI. | 0:00 - 9:59 | PRINTER N |
| | | 10:00 - 21:59 | PRINTER A |
| | | 22:00 - 23:59 | PRINTER N |
| | TUES., THURS. | 0:00 - 9:59 | PRINTER N |
| | | 10:00 - 21:59 | PRINTER M |
| | | 22:00 - 23:59 | PRINTER N |
| | SAT., SUN., HOL. | 0:00 - 23:59 | PRINTER N |
| ... | ... | ... | ... |

Table 3 illustrates another example of the correspondence information 125 in accordance with the second embodiment.

The correspondence information 125 in Table 3 further includes information about a day of the week in addition to the information included in the correspondence information 125 illustrated in Table 2. The output-destination determination part 124 may cause a desired one of the printers 150 to execute printing in accordance with a corresponding day of the week when the IP address of the information terminal 140 is "10.0.0.1", and time information of the published desktop 111a is "11:00".

### OUTLINE

The information processing system 100 according to the embodiments that include different thin client systems may allocate a print destination to a desired one of the printers utilizing the information about the published desktop 111.

An aspect of the embodiments may provide an information processing system (100) that includes a first server apparatus (110) configured to provide a virtual desktop (111) to a terminal apparatus (140) coupled to the first server apparatus (110) via a network, the virtual desktop (111) representing a virtualized desktop environment; a second server apparatus (120) configured to provide an application (121) to the terminal apparatus (140) via the virtual desktop (111); and a third server apparatus (139) configured to manage a plurality of image forming apparatuses (150a and 150b) coupled to the network, and control printing executed by the image forming apparatuses (150a and 150b). The second server apparatus (120) includes an acquisition unit (401) configured to acquire predetermined information about the virtual desktop (111) from the first server apparatus (110), based on a print request from the application (121), a determination unit (402) configured to determine a desired one of the image forming apparatuses (150a and 150b) based on correspondence information (125) storing the predetermined information in association with the image forming apparatuses (150a and 150b), and a request unit (123) configured to request the third server apparatus (130) to cause the determined one of the image forming apparatuses (150a and 150b) to execute printing. The first server apparatus (110) includes an information provider (112) configured to report the predetermined information about the virtual desktop (111) to the second server apparatus (120), in response to an acquisition request for the predetermined information from the second server apparatus (120).

In the above-described configuration, the information processing system 100 having the different thin client systems of the terminal server and the application delivery server (110 and 120) may facilitate allocation of printing without an additional database server or changing a main body of the terminal server (110).

The predetermined information may preferably include the unique information including the time information, the language information, and the area information relating to the virtual desktop (111).

The printing allocation may thus be performed using the unique information about the virtual desktop (111) in the information processing system 100 including different thin client systems (110 and 120).

The reference numbers in the above brackets are examples that are given for facilitating understanding of the specification, and do not limit the scope of the claims.

The present invention can be implemented in any convenient form, for example, using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can comprise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device.

The computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, a hard disk, a CD ROM, a magnetic tape device or a solid state memory device.

The present invention is not limited to the specifically disclosed embodiments, and variations and modifications may be made without departing from the scope of the present invention.

## Claims

1. An information processing system (100) comprising:
a first server apparatus (110) configured to provide a virtual desktop (111) to a terminal apparatus (140) coupled to the first server apparatus (110) via a network, the virtual desktop (111) representing a virtualized desktop environment;
a second server apparatus (120) configured to provide an application (121) to the terminal apparatus (140) via the virtual desktop (111); and
a third server apparatus (130) configured to manage a plurality of image forming apparatuses (150a, 150b) coupled to the network, and control printing executed by the image forming apparatuses (150a, 150b), wherein the second server apparatus (120) includes
an acquisition unit (401) configured to acquire predetermined information about the virtual desktop (111) from the virtual desktop (111), based on a print request from the application (121),
a determination unit (402) configured to determine a desired one of the image forming apparatuses (150a, 150b) based on correspondence information (125) storing the predetermined information in association with the image forming apparatuses (150a, 150b), and
a request unit (123) configured to transmit a print execution request to the third server apparatus (130) to cause the determined one of the image forming apparatuses (150a, 150b) to execute printing, and wherein the first server apparatus (110) includes
an information provider (112) configured to report the predetermined information about the virtual desktop to the second server apparatus (120), in response to an acquisition request for the predetermined information from the second server apparatus (120) to the virtual desktop (111).

2. The information processing system (100) according to in claim 1, wherein the information provider is implemented by a program operating on the virtual desktop (111).

3. The information processing system (100) according to claim 1 or 2, wherein the predetermined information includes destination information of the terminal apparatus (140) configured to access the virtual desktop (111).

4. The information processing system (100) according to claim 3, wherein the destination information includes one of an IP address and a MAC address.

5. The information processing system (100) according to any one of claims 1 to 4, wherein the predetermined information includes one of time information, language information, and area information relating to the virtual desktop (111).

6. The information processing system (100) according to any one of claims 1 to 5, wherein the information provider (112) includes an information acquisition unit (502) configured to acquire the predetermined information using an API of an operating system operating on the virtual desktop (111).

7. The information processing system (100) according to claim 3 or 4, wherein the information provider (112) includes an information acquisition unit (502) configured to acquire the destination information from the terminal apparatus (140).

8. A method for controlling printing in an information processing system (100), the information processing system (100) including a first server apparatus (110) configured to provide a virtual desktop (111) to a terminal apparatus (140) coupled to the first server apparatus (110) via a network, the virtual desktop (111) representing a virtualized desktop environment, a second server apparatus (120) configured to provide an application (121) to the terminal apparatus (140) via the virtual desktop (111), and a third server apparatus (130) configured to manage a plurality of image forming apparatuses (150a, 150b) coupled to the network, and control printing executed by the image forming apparatuses (150a, 150b), the method comprising:
causing the second server apparatus (120) to transmit an acquisition request to the virtual desktop (111) to provide predetermined information about the virtual desktop (111), based on a print request from the application (121);
causing the first server apparatus (110) to report the predetermined information about the virtual desktop (111) to the second server apparatus (120), in response to the acquisition request for the predetermined information to the virtual desktop (111);
causing the second server apparatus (120) to acquire the reported predetermined information;
causing the second server apparatus (120) to determine a desired one of the image forming apparatuses (150a, 150b) based on correspondence information (125) storing the predetermined information in association with the image forming apparatuses (150a, 150b); and
causing the second server apparatus (120) to transmit a print execution request to the third server apparatus (130) to cause the determined one of the image forming apparatuses (150a, 150b) to execute printing.

9. The method according to claim 8, wherein the causing the first server apparatus (110) to report the predetermined information about the virtual desktop (111) to the second server apparatus (120) is implemented by a program operating on the virtual desktop (111).

10. The method according to claim 8 or 9, wherein the predetermined information includes destination information of the terminal apparatus (140) configured to access the virtual desktop (111).

11. The method according to claim 10, wherein the destination information includes one of an IP address and a MAC address.

12. The method according to any one of claims 8 to 11, wherein the predetermined information includes one of time information, language information, and area information relating to the virtual desktop (111).

13. The method according to any one of claims 8 to 12, wherein the causing the first server apparatus (110) to report the predetermined information about the virtual desktop (111) to the second server apparatus (120) includes acquiring the predetermined information using an API of an operating system operating on the virtual desktop (111).

14. The method according to claim 10 or 11, wherein the causing the first server apparatus (110) to report the predetermined information about the virtual desktop (111) to the second server apparatus (120) includes acquiring the destination information from the terminal apparatus (140).

15. An information processing apparatus (120) coupled to a first information processing apparatus (110) and a second information processing apparatus (130) via a network, the first information processing apparatus (110) being configured to provide a virtual desktop (111) to a terminal apparatus (140) coupled to the first information processing apparatus (110) via the network, the virtual desktop (111) representing a virtualized desktop environment, the second information processing apparatus (130) being configured to manage a plurality of image forming apparatuses (150a, 150b) coupled to the network, and control printing executed by the image forming apparatuses (150a, 150b), the information processing apparatus (120) comprising:
an acquisition unit (401) configured to acquire predetermined information about the virtual desktop (111) from the virtual desktop (111), based on a print request from an application (121);
a determination unit (402) configured to determine a desired one of the image forming apparatuses (150a, 150b) based on correspondence information (125) storing the predetermined information in association with the image forming apparatuses (150a, 150b); and
a request unit (123) configured to transmit a print execution request to the second information processing apparatus (130) to cause the determined one of the image forming apparatuses (150a, 150b) to execute printing.
